# EUROPÄISCHE PATENTANMELDUNG

(11) **EP 3 944 931 A1**
(43) Veröffentlichungstag der Anmeldung: **02.02.2022**
(21) Anmeldenummer: 20188694.2
(22) Anmeldetag: 30.07.2020
(51) Int. Cl.: B25J 9/16, G05B 19/4061

(54) **KOLLISIONSVERMEIDUNG MIT KÜNSTLICHER INTELLIGENZ**

(71) Anmelder: Siemens Aktiengesellschaft, 80333 München (DE)
(72) Erfinder: Hamm, Carsten, 91330 Eggolsheim (DE); Handeck, Jörg, 91058 Erlangen (DE)

(57) **Zusammenfassung**

Die Erfindung betrifft ein Verfahren zum Betrieb einer Maschine (20) sowie eine Maschine (20) zur Verwendung in einer industriellen Produktionsumgebung, wobei die Maschine (20) zur Ausführung einer bestimmten Bewegung wenigstens eine bewegliche Achse sowie eine Steuereinrichtung (30) umfasst. Zur Vermeidung von Kollisionen zwischen Teilen der Maschine (20) bzw. der industriellen Produktionsumgebung wird zunächst vorbestimmt, ob die Bewegung zu einer Kollision von in der industriellen Produktionsumgebung vorhandener Gegenstände (5, 6, 7, 21, 22, 23) führen wird. Wird eine drohende Kollision erkannt, so wird die Bewegung gestoppt. Die Erfindung zeichnet sich dadurch aus, dass zum Vorbestimmen einer drohenden Kollision Mittel einer künstlichen Intelligenz verwendet werden.

## Beschreibung

Die Erfindung betrifft ein Verfahren zum Betrieb einer Maschine zur Verwendung in einer industriellen Produktionsumgebung, wobei die Maschine zur Ausführung einer bestimmten Bewegung wenigstens eine bewegliche Achse sowie eine Steuereinrichtung umfasst, mit folgenden Schritten:
- vorbestimmen ob die Bewegung zu einer Kollision von in der industriellen Produktionsumgebung vorhandenen Gegenständen führen wird,
- verhindern einer drohenden Kollision der in der industriellen Produktionsumgebung vorhandenen Gegenstände.

Ferner betrifft die Erfindung eine Maschine zur Verwendung in einer industriellen Produktionsumgebung und zur Durchführung eines derartigen Verfahrens.

In modernen industriellen Produktionsumgebungen ist heute die Verwendung einer Vielzahl unterschiedlicher Maschinen üblich. Beispiele hierfür sind Werkzeugmaschinen, Produktionsmaschinen, Handlingsmaschinen oder Roboter. Derartige Maschinen umfassen wenigstens eine bewegliche Achse, in der Regel jedoch eine Vielzahl derartiger beweglicher Achsen, mittels derer in der industriellen Produktionsumgebung vorhandene Gegenstände bewegt werden. Bei diesen Achsen handelt es sich insbesondere um Linearachsen, die zu einer linearen Bewegung eines entsprechenden Gegenstandes führen, oder um Rundachsen, die zu einer Drehbewegung führen. Zur Steuerung der Bewegungen ist in der industriellen Produktionsumgebung wenigstens eine Steuereinrichtung vorhanden. Häufig ist jedoch jeder Maschine der industriellen Produktionsumgebung eine eigene Steuereinrichtung, zum Beispiel eine numerische Steuerung für eine bestimmte Werkzeugmaschine, zugeordnet.

In der industriellen Produktion hängt die Wirtschaftlichkeit der Produktion nicht zuletzt von den Stillstandszeiten der vorhandenen Maschinen ab. Der durch eine Maschinenkollision entstehende direkte materielle Schaden sowie der indirekte finanzielle Schaden durch Stillstandszeiten der Produktionsanlage kann die Wirtschaftlichkeit einer Produktion enorm verschlechtern.

Gerade bei kleineren Losgrößen wird die Produktion eines Produktes durch einen solchen Kollisionsfall schnell unrentabel. Diese Kollisionen können durch ein Kollisionsvermeidungssystem verhindert werden. Die Entscheidung, ob eine Maschine eine bestimmte Bewegung ausführen darf oder nicht, muss in Echtzeit geschehen, was zur Folge hat, dass die Algorithmen zur Kollisionserkennung bzw. Vermeidung enorm performant sein müssen. Die Basis dieser Kollisionsalgorithmen ist in der Regel eine geometrische Beschreibung der festen und beweglichen Maschinenteile (z.B. durch STL, IGES, STEP etc.) sowie die Beschreibung der Freiheitsgrade (in der Regel Linear- oder Rundachsen) der Maschine.

Kollisionserkennung im Sinne der Erfindung heißt, dass Erkennen bzw. Vorbestimmen (Vorhersagen) einer zukünftigen Kollision, die durch die Kollisionserkennung - insbesondere eine in die Zukunft gerichtete Simulation von Bewegungen von Gegenständen (Körpern) und eine Überprüfung, ob ein unbeabsichtigtes Zusammentreffen von wenigstens zwei dieser Gegenstände erfolgt - rechtzeitig erkannt und damit bei der realen Maschine verhindert wird.

Ein bekannter Nachteil der üblichen Kollisionsalgorithmen ist, dass in der Regel ein Kompromiss zwischen Genauigkeit der Modellierung der Maschine und der damit zusammenhängenden Geschwindigkeit des Kollisionsalgorithmus eingegangen werden muss. Durch eine genauere Maschinenbeschreibung vergrößert sich auch der für die Beschreibung sowie für die Ausführung des Kollisionsalgorithmus benötigte Speicher. Außerdem sind die meisten Kollisionsalgorithmen situationsabhängig. Dies bedeutet, dass die geometrische Ausrichtung der gegeneinander zu prüfenden Gegenstände (Körper) Einfluss auf die Laufzeit des Kollisionsalgorithmus hat. Zudem ist eine Worstcase-Abschätzung der Laufzeit eben wegen dieser Abhängigkeit nur sehr schwer bis gar nicht möglich.

Damit die Kollisionsalgorithmen im Echtzeitkontext ausgeführt werden können, schränkt man in der Regel die Anzahl der nutzbaren geometrischen Elemente, die zur Beschreibung der in der industrielle Produktionsumgebung vorhandenen Gegenstände (Maschinenteile, Maschinenoberflächen bzw. Volumen etc.) herangezogen werden können, ein. Diese Elemente sind üblicherweise Dreiecke oder (meist konvexe) primitive Volumenkörper (Quader, Kugel, Kegel, etc.). Durch die Einschränkung der nutzbaren Elemente wird die Approximationsgüte der Modellierung gröber und die Wahrscheinlichkeit einer fehlerhaften, sprich zu früh oder zu spät erkannten Kollision nimmt zu und muss für die Echtzeitfähigkeit in Kauf genommen werden.

Aus der EP 2 515 192 A1 ist ein Verfahren zur Vermeidung einer ungewollten Kollision zwischen einem Werkzeug und einem Werkstück bei einer Werkzeugmaschine bekannt, wobei anhand einer Bremsendanordnung des Werkzeugs und eines die geometrische Form des Werkzeugs beschreibenden Werkzeugformmodells ein Werkzeugmodell ermittelt wird und wobei überprüft wird, ob das Werkzeugmodel sich mit einem eine geometrische Form des Werkstücks beschreibenden vorgegebenen Werkstückmodell überschneidet.

Aus der EP 2 919 081 A1 ist ein Betriebsverfahren für eine mit einer numerischen Steuerung verbundene Werkzeugmaschine bekannt, bei dem Maschinenelementen, einem Werkstück und einem Werkzeug innerhalb der numerischen Steuerung virtuelle Schutzkörper zugeordnet sind, wobei die numerische Steuerung vor dem Ansteuern von lagegeregelten Achsen der Werkzeugmaschine Volumina ermittelt, die von den Schutzkörpern bei Ansteuerung der lagegeregelten Achsen gemäß einer Sequenz von Lagesollwerten eingenommen würden, und prüft, ob - soweit erforderlich, mit Ausnahme der durch das Werkzeug am Werkstück vorzunehmenden Bearbeitung - die Schutzkörper hierbei disjunkt voneinander bleiben. Wird bei dieser der realen Bearbeitung vorauseilenden Simulation festgestellt, dass sich Schutzkörper überschneiden, so wird dies als drohende Kollision erkannt und die Werkzeugmaschine rechtzeitig vor einer die realen Maschinenelemente, das reale Werkstück oder das reale Werkzeug betreffenden Kollision angehalten.

Künstliche Intelligenz (KI) und insbesondere künstliche neuronale Netzwerke (KNN) werden heute bereits auf vielen technischen Gebieten angewendet. Beispiele dafür sind Mustererkennung, Spracherkennung oder Gesichtserkennung. Eine Einführung in das Gebiet der künstlichen Intelligenz und insbesondere der künstlichen neuronalen Netzwerke gibt beispielsweise D. Kriesel, "A Brief Introduction to Neural Networks", http://www.dkriesel.com/en/science/neural_networks.

Aufgabe der vorliegenden Erfindung ist es, beim Betrieb einer Maschine in einer industriellen Produktionsumgebung Kollisionen zu vermeiden, wobei trotz einer Modellierung mit hoher Genauigkeit die Echtzeitfähigkeit des verwendeten Algorithmus gewährleistet werden soll.

Diese Aufgabe wird gelöst durch ein Verfahren zum Betrieb einer Maschine zur Verwendung in einer industriellen Produktionsumgebung, wobei die Maschine zur Ausführung einer bestimmten Bewegung wenigstens eine bewegliche Achse sowie eine Steuereinrichtung umfasst, mit folgenden Schritten:
- vorbestimmen ob die Bewegung zu einer Kollision von in der industriellen Produktionsumgebung vorhandenen Gegenständen führen wird,
- verhindern einer drohenden Kollision bei den in der industriellen Produktionsumgebung vorhandenen Gegenständen,
   wobei zum Vorbestimmen einer drohenden Kollision Mittel einer künstlichen Intelligenz verwendet werden.

Zu den in der industriellen Produktionsumgebung vorhandenen Gegenständen (Körpern), die hinsichtlich möglicher Kollisionen überprüft werden können, zählen insbesondere Teile der Maschine, Werkstücke, Aufspannmittel, Teile wenigstens einer weiteren Maschine, Transportmittel etc. Die Gegenstände können sowohl fest, d.h. ortsfest bzw. unbeweglich sein, z.B. unbewegliche bzw. feste Teile einer Maschine, als auch beweglich, z.B. bewegliche Teile einer Maschine.

Durch die bestimmte Bewegung, die von der Maschine ausgeführt wird, wird wenigstens ein Bauteil der Maschine gegenüber einem oder mehreren anderen Bauteilen der Maschine in seiner Position und/oder Orientierung verändert. Beispielsweise wird ein Werkzeug tragender Maschinenkopf einer Werkzeugmaschine oder ein Tool Center Point (TCP) eines Roboters gegenüber einer Maschinen-Basis bewegt bzw. verstellt.

Bisher hat man die gewünschte Bewegung vorausberechnet (simuliert) und überprüft, ob sich an der Maschine und in deren Umgebung vorhandene Gegenstände bzw. Körper (in der Simulation) überschneiden werden.

Bei der Erfindung hingegen gehen die Vorschau-Parameter der Bewegung, z.B. eine Sequenz zukünftiger Lagesollwerte einzelner Maschinenachsen, in die KI ein und diese liefert das Ergebnis: Kollision droht oder nicht.

Ziel der Erfindung ist es, eine drohende Kollision vorzubestimmen, das heißt vorauszuberechnen bzw. vorherzusagen, bevor diese durch das unbeabsichtigte Zusammentreffen wenigstens zweier in der industriellen Produktionsumgebung vorhandener Gegenstände tatsächlich eintritt. Wird eine zukünftige Kollision erkannt, so wird in analoger Weise zu dem bisherigen Vorgehen darauf reagiert, indem beispielsweise die Bewegung der Maschine gebremst bzw. gestoppt wird oder eine kollisionsbehaftete Bewegungsbahn in eine kollisionsfreie Bewegungsbahn überführt wird.

Analog zu bislang bekannten Algorithmen zur Kollisionserkennung basiert auch die Kollisionserkennung mittels künstlicher Intelligenz letztendlich auf zukünftigen Achspositionen (Lagesollwerten), die die Achsen der betrachteten Maschine einnehmen werden. Diese Vorschau auf zukünftige Achspositionen kann sich insbesondere aus einer Betrachtung der zuvor bereits eingenommenen Achspositionen oder aus den Anweisungen eines abzuarbeitenden Programms, z.B. eines Teileprogramms einer Werkzeugmaschine, oder auch einer Kombination aus beidem ergeben. Wie weit diese Vorausschau in die Zukunft gerichtet sein muss, hängt insbesondere von der Geschwindigkeit der bewegten Achsen und der maximal möglichen Beschleunigung zum Bremsen der Achsen ab. In jedem Fall muss die Kollisionserkennung soweit in die Zukunft gerichtet sein, dass bei einer erkannten drohenden Kollision alle notwendigen Maschinen-Achsen rechtzeitig zum Stillstand gebracht werden können, bevor eine reale Kollision erfolgt.

Gemäß der Erfindung wird für den Kollisionsschutz eine künstliche Intelligenz, z.B. ein künstliches neuronales Netzwerk oder eine Support Vector Machine (SVM) etc. eingesetzt, welche die Entscheidung übernimmt, ob eine Maschinenposition (Position der betreffenden Maschinen-Achsen) kollisionsfrei ist oder nicht.

Ein wichtiger Vorteil im Zusammenhang mit der Verwendung künstlicher Intelligenz ist dabei der gleichbleibende Bedarf an Rechenzeit, unabhängig von den Eingangsparametern.

Mit der vorliegenden Erfindung können daher die oben adressierten Probleme gelöst werden. Es können beliebig genaue Maschinenmodelle verwendet werden, ohne dass die Laufzeit der Kollisionsprüfung dadurch beeinträchtigt bzw. beeinflusst wird. Zusätzlich wird die Laufzeit unabhängig von der Maschinenposition sowie eine Worstcase-Abschätzung exakt bestimmbar. Auch durch eine genauere Maschinenbeschreibung wird nicht mehr Speicher oder Rechenzeit benötigt.

Bei einer Ausführungsform der Erfindung umfassen die verwendeten Mittel einer künstlichen Intelligenz ein künstliches neuronales Netzwerk (KNN). Diese sind inzwischen weit verbreitet, so dass weitgehend auf vorhandene künstliche neuronale Netzwerke (also im Wesentlichen auf bereits vorhandene Software) zurückgegriffen werden kann.

Das KNN weist vorzugsweise eine Eingabeschicht auf, bei der einzelnen Eingabe-Neuronen jeweils eine Achsposition oder ein Achswinkel zugeordnet ist.

Weiterhin weist das KNN eine Ausgabeschicht auf, bei der einzelne Ausgabe-Neuronen jeweils eine Kollisionsbewertung für ein Kollisionspaar zugeordnet ist. Ist zum Beispiel ein bestimmtes Ausgabeneuron aktiviert, so heißt das, dass bei einem sich hinter dem Ausgabe-Neuron verbergenden Kollisionspaar eine Kollision droht.

Zwischen der Eingabeschicht und der Ausgabeschicht weist das KNN wenigstens eine - in der Regel jedoch eine Vielzahl verdeckter Zwischenschichten auf, bei denen einzelnen Zwischenschicht-Neuronen zum Beispiel jeweils ein fester oder bewegter Gegenstand der Produktionsumgebung zugeordnet ist.

Bei einer Ausführungsform der Erfindung werden mittels eines digitalen Zwillings wenigstens eines Teils der Produktionsumgebung Testdaten zum Trainieren des KNN erzeugt. Vorzugsweise sind alle in Hinblick auf mögliche Kollisionen in der industriellen Produktionsumgebung relevanten Gegenstände von dem digitalen Zwilling der industriellen Produktionsumgebung umfasst. Durch die Verwendung des digitalen Zwillings kann eine nahezu unbegrenzte Anzahl an Simulationen durchgeführt werden, ohne dass hierfür eine reale Maschine beansprucht wird. Dadurch kann das neuronale Netzwerk ohne großen Aufwand umfassend trainiert werden, was letztendlich zu sehr guten Ergebnissen bei der Kollisionserkennung führt.

Bei neuronalen Netzen werden die Kanten zwischen einzelnen Neuronen mit Gewichten versehen. Vorteilhaft erfolgt bei einer Ausführungsform der Erfindung eine Vorkonditionierung der Gewichte einzelner Neuronen, insbesondere auf Basis der kinematischen Struktur wenigstens eines Teils der Produktionsumgebung und/oder auf Basis einer Wahrscheinlichkeit einer Kollision einzelner Gegenstände innerhalb der industriellen Produktionsumgebung. Diese Maßnahme beschleunigt das Trainieren des KNN und führt so noch schneller zu guten Ergebnissen bei der Kollisionserkennung.

Eine weitere Maßnahme zur Beschleunigung und Verbesserung der Qualität beim Trainieren des KNN besteht darin, dass das Netzwerk beim Trainieren mehrfach mit unterschiedlichen Gewichten initialisiert wird.

Noch genauere Ergebnisse bei der Kollisionserkennung können dadurch erzielt werden, dass einzelnen Eingabe-Neuronen der Eingabeschicht jeweils eine Achsgeschwindigkeit oder eine Achs-Winkelgeschwindigkeit zugeordnet werden.

Die eingangs gestellte Aufgabe wird ferner gelöst durch eine Maschine zur Verwendung in einer industriellen Produktionsumgebung, wobei die Maschine zur Ausführung einer bestimmten Bewegung wenigstens eine bewegliche Achse sowie eine Steuereinrichtung umfasst, insbesondere eine Maschine zur Durchführung eines oben genannten Verfahrens, aufweisend:
eine Kollisionserkennungseinrichtung zur Vorhersage, ob die Bewegung zu einer Kollision von in der industriellen Produktionsumgebung vorhandenen Gegenstände führen wird, und eine Kollisionsverhinderungseinrichtung, die im Fall einer drohenden Kollision die Kollision der in der industriellen Produktionsumgebung vorhandenen Gegenstände verhindert, wobei die Kollisionserkennungseinrichtung Mittel einer künstlichen Intelligenz umfasst.

Im einfachsten Fall umfasst die erfindungsgemäße industriellen Produktionsumgebung lediglich eine einzelne Maschine, die ein Werkstück be- oder verarbeitet, herstellt oder transportiert. Selbstverständlich könne darunter aber auch größere Anlage mit einer Vielzahl einzelner Maschinen fallen, die vorzugsweise zumindest teilweise miteinander interagieren.

Da jede Maschine in der Regel eine Vielzahl beweglicher Teile bzw. Gegenstände aufweist, ist die Anzahl der Gegenstände, die hinsichtlich möglicher Kollisionen überprüft werden müssen, umso größer. Zu diesen in der industriellen Produktionsumgebung vorhandenen und zu überprüfenden Gegenständen zählen insbesondere feste oder bewegliche Teile der jeweiligen Maschine, Werkzeuge, Werkstücke, Aufspannmittel, Transportmittel, eine oder mehrere weitere Maschinen oder Teile davon etc.

Weiterhin wird die eingangs gestellte Aufgabe gelöst durch eine Kollisionserkennungseinrichtung für eine oben genannte Maschine, wobei die Kollisionserkennungseinrichtung Mittel einer künstlichen Intelligenz aufweist.

Vorzugsweise umfasst das Mittel der künstlichen Intelligenz ein künstliches neuronales Netzwerk (KNN) oder ist als künstliches neuronales Netzwerk ausgebildet.

Zum Trainieren des künstlichen neuronalen Netzwerks (KNN) der Kollisionserkennungseinrichtung werden vorteilhaft mittels eines digitalen Zwillings wenigstens eines Teils der industriellen Produktionsumgebung, vorzugsweise der gesamten industriellen Produktionsumgebung, Testdaten zum Trainieren des KNN erzeugt.

Eine entsprechende Trainingseinrichtung zum Trainieren des künstlichen neuronalen Netzwerks der Kollisionserkennungseinrichtung umfasst vorteilhaft eine bezüglich der industriellen Produktionsumgebung externe Recheneinrichtung, insbesondere einen Cloud- oder Edge-Computer. Auch externe Datenbanken können hier gewinnbringend mit einbezogen werden. So kann nahezu unabhängig von realen Maschinen eine nahezu unbegrenzte Anzahl an Trainingsdaten erzeugt werden, was die mittels der künstlichen Intelligenz erzielbaren Ergebnisse wesentlich verbessert.

Im Zusammenhang mit der Erfindung lassen sich mit gut trainierten, künstlichen neuronalen Netzwerken leicht Vorhersagewahrscheinlichkeiten von über 97% erreichen. Implementiert man zwei künstliche neuronale Netzwerke unabhängig voneinander, die jeweils die 97% Vorhersagewahrscheinlichkeit erreichen, kann man statistisch die Vorhersagewahrscheinlichkeit auf 99,91% erhöhen bzw. man reduziert die Unsicherheit auf 0,1%.

Die Wahrscheinlichkeit, dass beide KNN gleichzeitig eine falsche Entscheidung treffen, ist also äußerst gering. In dem Fall, dass die KNN zu einem unterschiedlichen Ergebnis kommen, weiß man, dass wenigstens eines falsch liegt. In diesem Fall kann eine gemäß einer Backup-Strategie hinterlegte Vorgehensweise ausgeführt werden. Diese kann verschieden ausgeprägt sein. Eine mögliche Ausführungsform wäre, dass man die betreffende Maschine in einer solchen Situation grundsätzlich anhält. Eine andere Ausführungsform sieht vor, dass man in diesem Fall zusätzlich auf einen klassischen Algorithmus zurückgreift und mit diesem dann die Entscheidung trifft.

Die Erfindung wird nachfolgend anhand von Ausführungsbespielen näher erläutert. Dabei zeigen:
- FIG 1: Eine von einer numerischen Steuerung gesteuerte Werkzeugmaschine,
- FIG 2: eine erste Ausführungsform eines künstlichen neuro-nalen Netzwerks,
- FIG 3: eine zweite Ausführungsform eines künstlichen neuro-nalen Netzwerks,
- FIG 4: Verfahrensschritte eines erfindungsgemäßen Verfahrens.

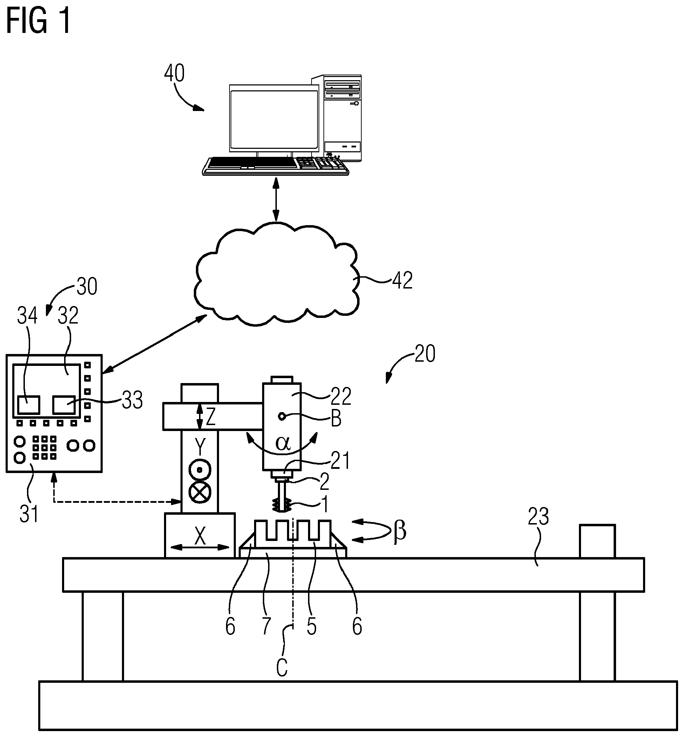

In FIG 1 ist schematisiert eine Werkzeugmaschine 20 dargestellt. Die Werkzeugmaschine 20 verfügt im Rahmen des Ausführungsbeispiels über fünf Maschinenachsen, durch die eine Relativbewegung zwischen einem Werkzeug 1, das im Rahmen des Ausführungsbeispiels in Form eines Fräsers vorliegt, und einem Werkstück 5 durchgeführt werden kann. Das Werkzeug 1 ist dabei in einen Werkzeughalter 2 eingespannt, der mit einer Werkzeugspindel 21 verbunden ist, die von einem Motor 22 rotatorisch angetrieben wird. Der Motor 22 und damit das Werkzeug 1 lassen sich mit der Übersichtlichkeit halber in FIG 1 nicht dargestellten Antrieben in X-, Y- und Z-Richtung translatorisch bewegen und um einen Winkel α um eine Rundachse B, die parallel zu der Y-Achse verläuft, drehen. Weiterhin kann das Werkstück 5 mit Hilfe eines angetriebenen Werkstücktisches 7 um einen Winkel β um eine Rundachse C, die parallel zu der Z-Achse verläuft, gedreht werden. Der Werkstücktisch 7 ist dabei auf einem ruhenden Maschinengestell 23 drehbar gelagert.

Das Werkstück 5 ist durch Spannmittel 6 am Werkstücktisch 7 befestigt.

Die Werkzeugmaschine 20 weist somit fünf Maschinenachsen (die 3 Linearachsen X, Y und Z sowie die 2 Rundachsen B und C) auf, d.h. es handelt sich um eine sogenannte 5-achsige Werkzeugmaschine.

Es sei dabei an dieser Stelle angemerkt, dass die Werkzeugmaschine 20 selbstverständlich auch noch mehr oder weniger als fünf Maschinenachsen aufweisen kann.

Die Werkzeugmaschine 20 ist mit einer numerischen Steuerung 30 verbunden, die anhand eines Teileprogramms 33 und/oder einer Handbedieneingabe Lagesollwerte x, y, z, α und β zur Steuerung einer zwischen dem Werkzeug 1 und dem Werkstück 5 stattfindenden Relativbewegung ermittelt. Die numerische Steuerung 30 ermittelt die Lagesollwerte anhand des Teileprogramms 33, in dem die vom Werkzeug 1 in Bezug zum Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der numerischen Steuerung 30 von einem Bediener vor Ort an der Werkzeugmaschine 20 vorgegeben werden. Die Bedieneinrichtung 31 weist hierzu insbesondere Tasten und Drehregler auf.

Das Teileprogramm 33 wird dabei üblicherweise von einem CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms 33 erzeugt die numerische Steuerung 30 in einem bestimmten Takt, dem Interpolationstakt, sowohl Lagesollwerte x, y und z für die Linearachsen als auch α und β (Winkellagen) für die Rundachsen. Durch diese Lagesollwerte wird das Werkzeug 1 mit vorgegebener Orientierung relativ zu dem Werkstück 5 entlang einer Bewegungsbahn bewegt.

Die numerische Steuerung 30 umfasst eine in Form einer auf der Steuerung 30 ablauffähigen Software implementierte Kollisionserkennungseinrichtung 34, mittels derer drohende Kollisionen zwischen Teilen der Werkzeugmaschine 20, dem Werkzeug 1 sowie dem Werkstück 5 vorausschauend erkannt und dadurch bei der realen Werkzeugmaschine 20 verhindert werden können.

Gemäß einer bisherigen Funktionsweise einer Kollisionserkennungseinrichtung 34 werden dieser zyklisch von der Steuerung ermittelte, zukünftige Lagesollwerte xᵢ, yᵢ, zᵢ, αᵢ und βᵢ zugeführt. Die zukünftigen Lagesollwerte werden dabei vorzugsweise durch Extrapolation aus den aktuell von der numerischen Steuerung 30 erzeugten Lagesollwerten und aus weiter in der Vergangenheit liegenden Lagesollwerten ermittelt. So kann z.B. aus den aktuellen Lagesollwerten und den in der Vergangenheit liegenden Lagesollwerten die Geschwindigkeit des Werkzeugs 1 in jeder Richtung berechnet werden und anhand dieser Geschwindigkeit eine zu erwartende zukünftige Lage des Werkzeugs 1 ermittelt werden. In der Regel wird dabei die Sequenz zukünftiger Lagesollwerte xᵢ, yᵢ, zᵢ, αᵢ und βᵢ nur um wenige Interpolationstakte der numerischen Steuerung 30, d.h. in der Regel nur um wenige Millisekunden in die Zukunft vorausberechnet. Die zu erwartenden zukünftigen Lagesollwerte stimmen somit sehr genau mit den tatsächlichen zukünftigen Achspositionen (Lageistwerten) überein.

Für den Fall, dass die so ermittelten zukünftigen Lagesollwerte nicht ausreichen, um die Werkzeugmaschine 20 im Fall einer erkannten, drohenden Kollision zum Stillstand zu bringen, kann alternativ oder zusätzlich auch auf die Angaben im Teileprogramm zurückgegriffen werden, um entsprechend weiter in der Zukunft liegende Lagesollwerte zu generieren, die hinsichtlich drohender Kollisionen zu überprüfen sind.

Gemäß der vorbekannten Vorgehensweise sind in der Kollisionserkennungseinrichtung 34 Geometrie-Daten hinterlegt, die das Werkzeug 1, das Werkstück 5 sowie in Bezug auf Kollisionen relevante Maschineteile (im Ausführungsbeispiel das Maschinengestell 23 oder die Einspannvorrichtung 24) betreffen und aus denen die Kollisionserkennungseinrichtung 34 ein Werkzeugmodell, ein Werkstückmodell sowie ein Maschinenmodell generiert. Ferner bestimmt die Kollisionserkennungseinrichtung 34 aus den Lagesollwerten die Position, Orientierung und ggf. Geschwindigkeit der einzelnen Modelle.

Die Kollisionserkennungseinrichtung 34 erkennt dann eine Kollision, wenn bei den Modellen in ihren durch die ermittelten, zukünftigen Lagesollwerte xᵢ, yᵢ, zᵢ, αᵢ und βᵢ vorbestimmten Positionen zu Überschneidungen kommt.

Die verwendeten Modelle können verhältnismäßig exakte Abbilder ihrer realen Pendants darstellen, sie können sich aber auch aus einfachen geometrischen Körpern (Quader, Zylinder, Kegel etc.) zusammensetzten, die sog. Schutzkörper oder Einhüllende bilden. Letzteres reduziert die zur Kollisionserkennung benötigte Rechenleistung.

Wenn die Kollisionserkennungseinrichtung 34 feststellt, dass sich zwei oder mehr der genannten Modelle bei den ermittelten zukünftigen Lagesollwerten überschneiden, so bewirkt sie ein Abbremsen der Relativbewegung zwischen Werkzeug 1 und Werkstück 5 bis zum Stillstand der Relativbewegung.

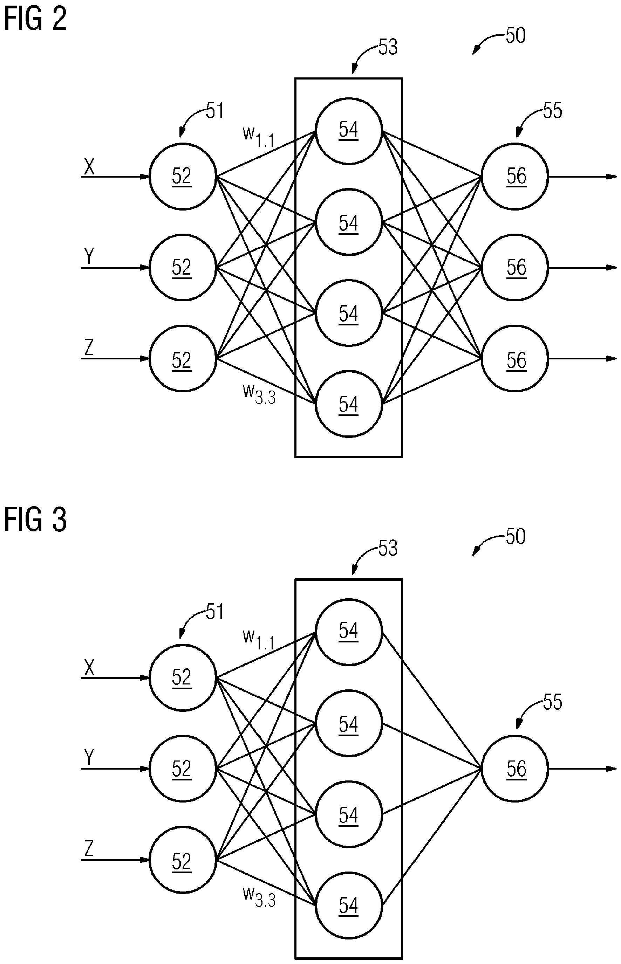

Erfindungsgemäß umfasst die Kollisionserkennungseinrichtung 34 nun ein künstliches neuronales Netzwerk (KNN) 50 zur Erkennung von Kollisionen. Eine mögliche Topologie eines derartigen KNN 50 zeigt FIG 2. Das KNN 50 umfasst eine Eingabeschicht 51 mit Eingabe-Neuronen (Input-Neuronen) 52. Die Eingabe-Neuronen 52 entsprechen den Freiheitsgraden der Maschine 20 und werden mit den jeweiligen zukünftigen, hinsichtlich möglicher Kollisionen zu überprüfenden Lagesollwerten befüllt.

Das Netzdesign der verdeckten Zwischenschicht 53, auch als verdeckte Neuronenschicht bzw. engl. "hidden layer" bezeichnet, mit den Zwischenschicht-Neuronen 54 kann nun völlig unterschiedlich aussehen. Eine mögliche und für dieses Ausführungsbeispiel anschauliche Ausprägung eines solchen hidden layer 53 wäre die Repräsentation der festen wie beweglichen Maschinenteile durch die Neuronen 54 des hidden layer. Es sind auch weitere hidden layer (nicht dargestellt) möglich, die z.B. die entsprechenden Korrelationen der Maschinenteile miteinander repräsentieren.

Die Eingabe-Neuronen 52 gehen mit unterschiedlichen Gewichtungen wᵢⱼ auf die verdeckte Neuronenschicht 53 ein. Ein wesentlicher Aspekt beim Trainieren eines neuronalen Netzes 50 ist die Bestimmung dieser Gewichtungen wᵢⱼ.

Die in der Ausgabeschicht 55 vorhandenen Ausgabe-Neuronen 56 repräsentieren Kollisionspaare von in der industriellen Produktionsumgebung vorhandenen Gegenständen, zwischen denen jeweils prinzipiell eine Kollision möglich ist. Ein aktiviertes Ausgabe-Neuron 56 eines Kollisionspaars zeigt an, dass bei dem Kollisionspaar eine Kollision zu erwarten ist. Ist das betreffende Neuron 56 nicht aktiviert, so ist bei dem betreffenden Kollisionspaar keine Kollision zu befürchten.

Auch für die Ausgabeschicht 55 des Netzes sind, je nach Anforderung, unterschiedliche Designs möglich. Eine sehr einfache, aber effiziente Ausprägung der letzten Ausgabeschicht 55 wäre ein einzelnes Neuron 56 (siehe FIG 3), welches durch seinen Aktivierungszustand den Kollisionszustand einer gesamten Maschine bzw. der gesamten industriellen Produktionsumgebung beschreibt.

Auch die Verwendung mehrerer sichtbarer Ausgabeschichten 55 ist möglich, so dass neben der Information, dass prinzipiell eine Kollision bei der Maschine zu erwarten ist, zur besseren Nachvollziehbarkeit des Fehlers zusätzlich auch das betreffende aktivierte Neuron 56 bzw. das Kollisionspaar ersichtlich ist, bei dem eine Kollision wahrscheinlich ist.

Grundsätzlich sind Informationen vorhanden, die die KI nicht erlernen muss. Durch die Bereitstellung von bekannten Zusammenhängen kann beispielsweise eine Vorkonditionierung der Gewichte wᵢⱼ vorgenommen werden. Hierzu gehören z. B. die kinematische Struktur der Maschine (welche Elemente bewegen sich wie) oder die möglichen Kollisionspaare (welche Elemente können überhaupt kollidieren, welche nicht?). Diese Vorkonditionierung ist aber nur in bestimmten Fällen sinnvoll. Im Allgemeinen wird das Netzwerk 50 mehrfach mit unterschiedlichen Gewichten initialisiert um ein fehlerhaftes Training auszuschließen.

Das Training ("Deep Learning"-Prozess) des Netzes 50 selbst geschieht mit Hilfe von Testdaten, die beispielsweise in beliebiger Menge und Genauigkeit mit Hilfe eines digitalen Zwillings der Maschine bzw. Produktionsumgebung erzeugt werden können. Das Training selbst kann zum Beispiel als ausgelagerter Prozess als "Cloud"-Dienst (z.B. mittels der Cloud-Plattform "Mindsphere" von Siemens) oder per Edge-Computing (z.B. mittels eines Edge-Computers "SINUMERIK Edge" von Siemens) durchgeführt werden.

Insbesondere kann die Erzeugung von Trainingsdaten auf der oben beschriebenen, vorbekannten Funktionsweise der Kollisionserkennungseinrichtung 34 (vgl. FIG 1) beruhen. Anhand zukünftiger Lagesollwerte wird festgestellt, ob es zu Überschneidungen besagter Modelle kommt. Diese Information kann in Verbindung mit den betreffenden Lagesollwerten als Input für das KNN 50 dienen. Durch eine sehr große Anzahl derartiger Trainingsdaten wird das Netzwerk 50 mehr und mehr trainiert und gelangt so zu immer besseren Ergebnissen.

Sobald das trainierte KNN 50 Kollisionen mit hinreichender Genauigkeit voraussagt, kann bei der Kollisionserkennungseinrichtung 34 auf die beschriebene Verwendung von Modellen verzichtet werden.

Es sei an dieser Stelle angemerkt, dass die Verwendung und Funktion einer Kollisionserkennungseinrichtung 34 gemäß dem Ausführungsbeispiel lediglich beispielhaft zu verstehen ist und insbesondere auch den Unterschied zu der bisherigen Vorgehensweise bei der Kollisionserkennung und das Trainieren des KNN 50 veranschaulichen soll. Selbstverständlich kann eine erfindungsgemäße Kollisionserkennungseinrichtung 34 auch gänzlich ohne geometrische Modelle der hinsichtlich Kollisionen zu überprüfenden Gegenstände (Körper) auskommen, insbesondere da das Trainieren des KNN 50 auch unabhängig von einer realen Maschine und auch außerhalb der realen Steuerung der Maschine erfolgen kann.

In der Grundform ist das Verfahren als "einfacher" Klassifizierer ausgestaltet. Die Entscheidung der KI lautet: "Kollision" oder "keine Kollision". Es sind Erweiterungen möglich, welche weitere Informationen außer der konkreten Achsstellung einbeziehen. In einer denkbaren Ausprägung der Erfindung gehen neben den Positionen der Maschinenachsen auch deren Geschwindigkeiten ein. Hiermit ließen sich z.B. "gute" und "schlechte" Bewegungsrichtungen unterscheiden. Bewegungen von einer möglichen Kollision weg wären in Ordnung ("gut"), Bewegungen auf eine mögliche Kollision zu wären nicht in Ordnung ("schlecht"). Über eine 0/1-Entscheidung hinaus wäre so eine Beeinflussung der Verfahrgeschwindigkeit möglich. Mit abnehmendem Abstand zur Kollision ist dann nur noch eine reduzierte Geschwindigkeit erlaubt, z. B. langsam genug um noch anhalten zu können.

Wesentlich im Zusammenhang mit der Erfindung ist der Einsatz einer künstlichen Intelligenz zum Kollisionsschutz in einer industriellen Produktionsumgebung, insbesondere bei einer Werkzeug- oder Produktionsmaschine oder einem Roboter. Die wesentlichen Vorteile bestehen darin, dass:
a) ein beliebig genaues bzw. detailliertes Maschinenmodell (zum Trainieren der KI) verwendet werden kann, ohne später einen Einfluss auf die Laufzeit der Kollisionsprüfung zu haben,
b) die Laufzeit der Kollisionsprüfung nicht mehr von der Positionierung (aktuellen Position) der Maschine abhängig ist,
c) eine massiv geringere und konstante Rechenzeit für die Entscheidung der Kollisionsfreiheit benötigt wird.
   Zu a): Ein großer Nachteil vorbekannter Lösungen ist die massive Einschränkung der Modellierung der Maschinen, beispielsweise bei einer mit primitiven Körpern modellierten Maschine oder einer mittels Dreiecksflächen (STL)modellierten Maschine. Häufig wird dabei unnötig Volumen durch die primitiven Körper verdeckt. Dies wird aus zwei Gründen gemacht. Der Datenspeicher ist in einem Embedded-System in der Regel stark limitiert, so dass es nicht möglich ist, Modelle beliebiger Größen zu speichern. Die Performance ist durch die zyklische Taktung der Steuerung ebenfalls stark limitiert. Da die Modellgröße (Anzahl der Elemente) direkten Einfluss auf die Rechenzeit der klassischen Kollisionsalgorithmen hat, muss diese deswegen auch limitiert werden. Dies hat zur Folge, dass die betreffende Maschine an manchen Stellen nicht genau modelliert werden kann und man wegen einer zu groben Approximation der Maschine eine Kollision melden muss, an der tatsächlich aber keine Kollision stattfinden würde.
      Eine KI in Form eines künstlichen neuronalen Netzwerks (KNN) hat diese Probleme nicht. Es kann mit einem beliebig genauen Maschinenmodell trainiert werden und ist mit allen notwendigen Parametern im Allgemeinen nicht so speicherintensiv wie ein klassisches Maschinen-Modell. Die Auswertung des KNN ist nicht von der Genauigkeit der Maschinenmodellierung abhängig. Somit hat die Modellierung keine Auswirkung auf die Laufzeit der Kollisionsprüfung mittels des KNN.
   Zu b): Die Auswertung eines KNN ist in der Regel nicht von den Eingangswerten der Eingabe-Neuronen (Inputdaten) abhängig. Somit hat auch die Positionierung der Maschine keinen Einfluss auf die Laufzeit der Kollisionsprüfung.
   Zu c): Die klassischen Kollisionsalgorithmen haben den Nachteil, dass die Laufzeiten äußerst stark variieren, so dass man immer Mechanismen einbauen muss, die sicherstellen, dass man den Echtzeitkontext nicht verletzt. Dies ist mitunter nicht so leicht, da man an verschiedenen Stellen des Algorithmus neue Prüfungen einbauen muss.
      Der Grund liegt in der Tatsache, dass herkömmliche Algorithmen typischerweise iterativ arbeiten. Die Iterationstiefe hängt von der gegebenen Konstellation ab. Eine Vorhersage der Rechenzeit ist somit nicht immer möglich. Zudem hat man bei einem Abbruch wegen Laufzeitüberschreitung keine valide Aussage über den Zustand der Maschine. Es müssen wieder Backup-Strategien gerufen werden etc. Dies entfällt ebenfalls komplett bei Verwendung einer KI respektive eines KNN.

Das Trainieren der KI bzw. des KNN 50 erfolgt vorzugsweise mit Hilfe eines digitalen Zwillings der betreffenden Maschine 20 bzw. der betreffenden industriellen Produktionsumgebung. Dieser repräsentiert ein Modell der Maschine 20 und ist im Ausführungsbeispiel gemäß FIG 1 auf der Steuerung 30 und/oder einer damit über ein Netzwerk 42 verbundenen, externen Recheneinrichtung 40 vorhanden. Dabei kann der digitale Zwilling auch eine digitale Repräsentation der Steuerung 30, also eine virtuelle Steuerung (nicht dargestellt) umfassen. In der virtuellen Steuerung kann anhand des digitalen Zwillings der Maschine 20 bzw. einer die Maschine 20 umfassenden Produktionsumgebung eine große Anzahl an Achspositionen und - bewegungen simuliert werden. An dem geometrischen Modell der Maschine wird die Entscheidung über das Vorliegen einer Kollision ermittelt und der KI als Trainingsinput übergeben. So kann weitestgehend automatisiert eine nahezu unbegrenzte Anzahl an Trainingsdaten erzeugt werden, was letztendlich zu einer sehr hohen Qualität der Kollisionserkennung führt.

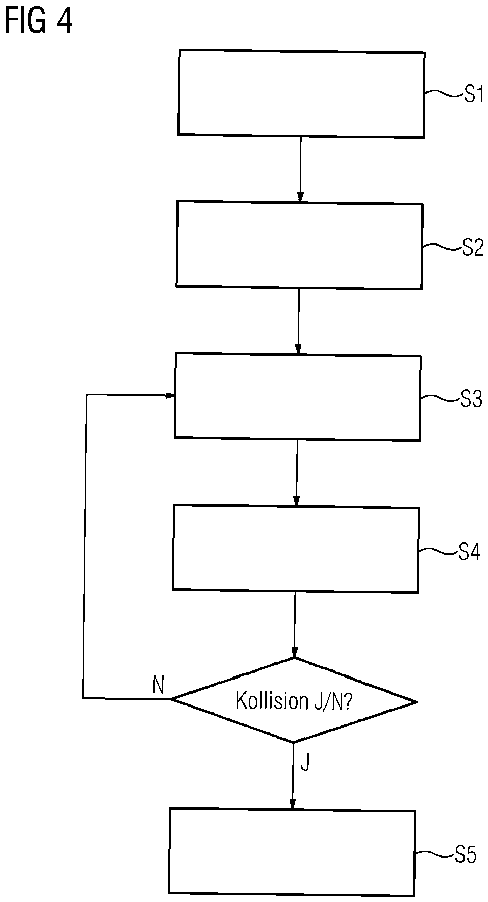

Nachfolgend werden die wesentlichen Verfahrensschritte bei der Durchführung eines erfindungsgemäßen Verfahrens nochmals in Form eines Ablaufdiagramms gemäß FIG 4 verdeutlicht.

In einem ersten Verfahrensschritt S1 wird wenigstens eine Maschine mit wenigstens einer positionierbaren Achse bereitgestellt. Zur Positionierung der Achse weist die Maschine eine numerische Steuerung auf, die eine Kollisionserkennungseinrichtung umfasst. Die Kollisionserkennungseinrichtung ist mit Mitteln einer künstlichen Intelligenz (KI), insbesondere einem künstlichen neuronalen Netzwerk (KNN) ausgestattet.

Weiterhin wird ein sogenannter digitaler Zwilling der Maschine inklusive einer virtuellen numerischen Steuerung bereitgestellt.

In einem Verfahrensschritte S2 wird das künstliche neuronale Netzwerk anhand von realen Bewegungen der Maschine und/oder anhand von mittels des digitalen Zwillings der Maschine simulierten Bewegungen der Maschine trainiert.

In einem Verfahrensschritte S3 werden von der numerischen Steuerung der Maschine zukünftige Lagesollwerte der Achsen der Maschine ermittelt.

In einem Verfahrensschritt S4 werden die in dem Verfahrensschritt S3 ermittelten zukünftigen Lagesollwerte dem KNN zugeführt und von diesem hinsichtlich möglicher Kollisionen überprüft.

Wird bei der Überprüfung eine Kollision festgestellt, so erfolgt ein Übergang zu Verfahrensschritte S5.

In dem Verfahrensschritt S5 wird die Maschine gestoppt, indem
- vorzugsweise mit größtmöglicher (negativer) Beschleunigung
- die Geschwindigkeit aller Achsen auf 0 reduziert wird.

Weiterhin wird eine Fehlermeldung an einem Display der numerischen Steuerung ausgegeben.

Ergibt die Überprüfung auf eine drohende Kollision im Verfahrensschritt S4, dass keine Kollision eintreten wird, so erfolgt ein Übergang zu Verfahrensschritte S3. Die sich so ergebende Schleife wird so lange ausgeführt, bis bei den zuletzt überprüften Achspositionen eine Kollision erkannt wird oder das Teileprogramm vollständig ohne Kollision abgearbeitet wurde.

## Patentansprüche

1. Verfahren zum Betrieb einer Maschine (20) zur Verwendung in einer industriellen Produktionsumgebung, wobei die Maschine (20) zur Ausführung einer bestimmten Bewegung wenigstens eine bewegliche Achse (X, Y, Z, α, β) sowie eine Steuereinrichtung (30) umfasst, mit folgenden Schritten:
- vorbestimmen ob die Bewegung zu einer Kollision von in der industriellen Produktionsumgebung vorhandenen Gegenständen (5, 6, 7, 21, 22, 23) führen wird,
- verhindern einer drohenden Kollision der in der industriellen Produktionsumgebung vorhandenen Gegenstände (5, 6, 7, 21, 22, 23),
**dadurch gekennzeichnet, dass** zum Vorbestimmen einer drohenden Kollision Mittel einer künstlichen Intelligenz verwendet werden.

2. Verfahren nach Anspruch 1, wobei die Mittel einer künstlichen Intelligenz ein künstliches neuronales Netzwerk (50) umfassen.

3. Verfahren nach Anspruch 2, wobei das künstliche neuronale Netzwerk (50) eine Eingabeschicht (51) aufweist, bei der einzelnen Eingabe-Neuronen (52) jeweils eine Achsposition oder ein Achswinkel zugeordnet ist.

4. Verfahren nach Anspruch 2 oder 3, wobei das künstliche neuronale Netzwerk (50) eine Ausgabeschicht (55) aufweist, bei der einzelnen Ausgabe-Neuronen (56) jeweils eine Kollisionsbewertung für ein Kollisionspaar zugeordnet ist.

5. Verfahren nach einem der Ansprüche 2 bis 4, wobei das künstliche neuronale Netzwerk (50) wenigstens eine verdeckte Zwischenschicht (53) aufweist, bei der einzelnen Zwischenschicht-Neuronen (54) jeweils ein fester oder verdeckter Gegenstand (5, 6, 7, 21, 22, 23) der Produktionsumgebung zugeordnet ist.

6. Verfahren nach einem der Ansprüche 2 bis 5, wobei mittels eines digitalen Zwillings wenigstens eines Teils der Produktionsumgebung Testdaten zum Trainieren des künstlichen neuronalen Netzwerks (50) erzeugt werden.

7. Verfahren nach einem der Ansprüche 2 bis 6, wobei eine Vorkonditionierung der Gewichte (wᵢⱼ) einzelner Eingabe-Neuronen (52) erfolgt, insbesondere auf Basis der kinematischen Struktur wenigstens eines Teils der Produktionsumgebung und/oder auf Basis einer Wahrscheinlichkeit einer Kollision einzelner Gegenstände (5, 6, 7, 21, 22, 23).

8. Verfahren nach einem der Ansprüche 2 bis 7, wobei das künstliche neuronale Netzwerk (50) beim Trainieren mehrfach mit unterschiedlichen Gewichten (wᵢⱼ) initialisiert wird.

9. Verfahren nach einem der Ansprüche 3 bis 8, wobei einzelnen Eingabe-Neuronen (52) der Eingabeschicht (51) jeweils eine Achsgeschwindigkeit oder eine Achs-Winkelgeschwindigkeit zugeordnet ist.

10. Verfahren nach einem der Ansprüche 1 bis 9, wobei die Kollisionserkennung von einem ersten Algorithmus und, insbesondere parallel dazu, von einem von dem ersten Algorithmus unabhängigen zweiten Algorithmus der künstlichen Intelligenz ausgeführt wird.

11. Maschine (20) zur Verwendung in einer industriellen Produktionsumgebung, wobei die Maschine (20) zur Ausführung einer bestimmten Bewegung wenigstens eine bewegliche Achse (X, Y, Z, α, β) sowie eine Steuereinrichtung (30) umfasst, insbesondere Maschine (20) zur Durchführung eines Verfahrens nach einem der Ansprüche 1 bis 10, aufweisend:
eine Kollisionserkennungseinrichtung (34) zur Vorhersage, ob die Bewegung zu einer Kollision von in der industriellen Produktionsumgebung vorhandener Gegenstände (5, 6, 7, 21, 22, 23) führen wird,
eine Kollisionsverhinderungseinrichtung (34), die im Fall einer drohenden Kollision die Kollision der in der industriellen Produktionsumgebung vorhandenen Gegenstände (5, 6, 7, 21, 22, 23) verhindert,
**dadurch gekennzeichnet, dass** die Kollisionserkennungseinrichtung (34) Mittel einer künstlichen Intelligenz umfasst.

12. Kollisionserkennungseinrichtung (34) für eine Maschine (20) nach Anspruch 11, **gekennzeichnet durch** Mittel einer künstlichen Intelligenz.

13. Kollisionserkennungseinrichtung (34) nach Anspruch 12, wobei die Mittel einer künstlichen Intelligenz ein künstliches neuronales Netzwerk (50) umfassen.

14. Kollisionserkennungseinrichtung (34) nach Anspruch 13, wobei mittels eines digitalen Zwillings wenigstens eines Teils der Produktionsumgebung Testdaten zum Trainieren des künstlichen neuronalen Netzwerks (50) erzeugt werden.

15. Trainingseinrichtung zum Trainieren eines künstlichen neuronalen Netzwerks (50) einer Kollisionserkennungseinrichtung (34) nach Anspruch 14.
